# EUROPEAN PATENT APPLICATION

(11) **EP 1 968 286 A1**
(43) Date of publication of application: **10.09.2008**
(21) Application number: 07004598.4
(22) Date of filing: 06.03.2007
(51) Int. Cl.: H04M 1/253

(54) **Auto-swap call box device and method for automatically swapping line connection**

(71) Applicant: F3 Inc., Science Park Hsinchu (TW)
(72) Inventor: Ouyang, Kenneth Wisheng, Da-an District Taipei City 106 (TW); Huang, Yin-Kun, Zhubei City Hsinchu County 302 (TW); Chen, Kuan-Hsi, East District Hsinchu City 300 (TW)
(74) Representative: Volpert, Marcus

(57) **Abstract**

An auto-swap call box device for VoIP telephony and a method of automatically swapping line connection, in which the control module of the call box controls a subscriber line interface circuit module, a line interface module, and a switch module to sequentially detect the electrical signal of a first phone line socket and the electrical signal of a second phone line socket, so as to set a first sense logic value and a second sense logic value, based on which by the control module the line connections to the first and the second phone line socket are routed.

## Description

### BACKGROUND OF THE INVENTION

### 1. Field of the Invention

The present invention relates to VoIP telephony. More particularly, the present invention relates to an auto-swap call box device for VoIP telephony and method for automatically swapping line connection.

### 2. Description of Related Art

As technology advances, traditional telephones have gradually been replaced by VoIP (Voice over Internet Protocol) phones. A typical VoIP phone operates by connecting to a computer, and requires the use of a microphone and speakers electrically connected to the computer for conversation.

Traditionally, VoIP phones require a microphone to pick up and transmit sound, and a set of speakers to broadcast the audio remotely received, causing great inconvenience to users accustomed to the traditional phone operation. Thus, this issue has been addressed by the emergence of VoIP phones on the market with the shape of mobile phones and built-in microphone and speakers. However, these types of Internet phone must be purchased at an extra cost, thus giving rise to economic burden; do not put existing traditional phones to effective use; and take up additional space.

Therefore, VoIP call boxes have been provided on the market to allow traditional phones to be connected to computers, thus making effective use of existing traditional phones to place calls and transmit voice over Internet.

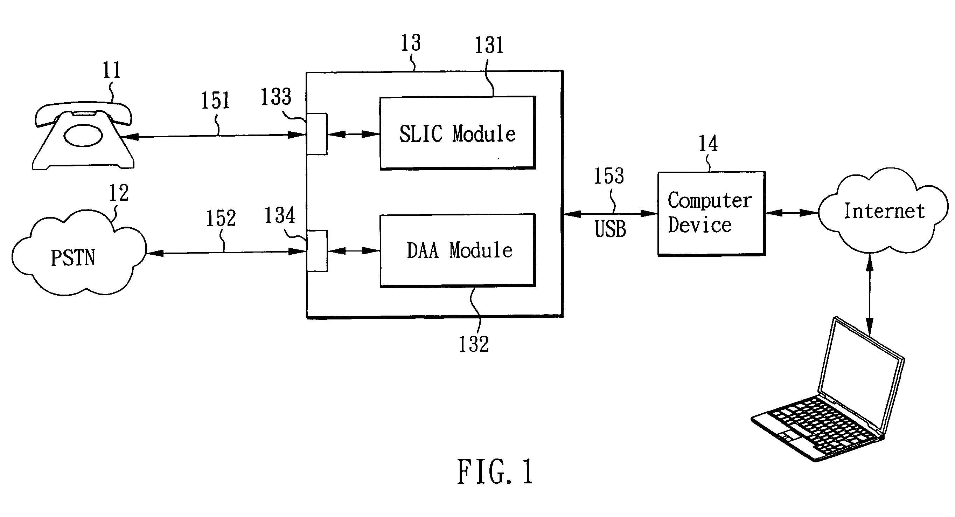

FIG 1 shows a functional block diagram of a traditional phone utilizing a call box. FIG. 1 shows a traditional phone 11, a PSTN 12, a call box 13, and a computer device 14. The call box 13 further includes a SLIC (Subscriber Line Interface Circuit) module 131, a DAA (Direct Access Arrangement) module 132, and phone line sockets 133 and 134.

The traditional phone 11 is electrically connected to phone line socket 133 through phone line 151. PSTN 12 is electrically connected to phone line socket 134 through phone line 152. Call box 13 is electrically connected to the computer device 14 via USB (Universal Serial Bus) interface. The computer device 14 can further connect to the Internet to establish VoIP calls with a remote user.

Generally speaking, the telephone company is configured with a SLIC module on one of its ends that generates voltage levels to the traditional telephone, and the traditional telephone is configured with a DAA module to correspond with the SLIC module of the telephone company, such that the user on the Internet can emulate telephone calls using the DAA module, and receive VoIP calls via the SLIC module.

In order for traditional phone 11 to receive VoIP calls made by a remote user on the Internet, the call box 13 needs to be implemented with the SLIC module 131. Also, to correspond with the SLIC module on the end of the telephone company, the call box 13 needs to be implemented with the DAA module 132.

The SLIC module 131 is electrically connected to phone line socket 133, for establishing electrical connection between phone line socket 133 and traditional telephone 11 via telephone line 151. DAA module 132 is electrically connected to phone line socket 134, for establishing electrical connection between phone line socket 134 and PSTN 12 via phone line 152.

However, both the phone lines 151 and 152 for respectively connecting to traditional telephone 11 and PSTN 12 have standard RJ-11 jacks. Consequently, a user is likely to be mistaken while plugging in the jacks of phone lines 151 and 152 to the respective phone line sockets 133 and 134. For instance, the user can erroneously plug the jack of phone line 151 to which connected traditional phone 11 into phone line socket 134, and the jack of phone line 152 to which connected PSTN 12 into phone line socket 133.

Since phone line socket 133 is electrically connected to SLIC module 131, the traditional telephone 11 must be plugged to the designated phone line socket 133 via phone line 151. Similarly, since phone line socket 134 is electrically connected to DAA module 131, PSTN12 must be connected to the designated phone line socket 134 via phone line 152. Any wrongful connection may lead to the malfunctioning of traditional phone 11, or even the damaging of the internal workings of call box 13.

Therefore, it is desirable to provide a method for automatically swapping line connection to prevent damages to the VoIP call box caused by wrongly connection.

### SUMMARY OF THE INVENTION

An object of the present invention is to provide an auto-swap call box device for VoIP telephony and method for automatically swapping line connection , for preventing the malfunctioning of a traditional phone due to the erroneous connection of phone lines.

Another object of the present invention is to provide an auto-swap call box device for VoIP telephony and method for automatically swapping line connection, for preventing the damaging to the internal workings of the VoIP call box due to the erroneous connection of phone lines.

According to one aspect, the present invention which achieves these objects relates to a method for automatically swapping line connection, applied to a device electrically connected to a traditional phone and a PSTN (Public Switched Telephone Network) respectively. The device includes a first phone line socket and a second phone line socket. The method begins by first connecting a first phone line to which connected the traditional phone to the first phone line socket, and connecting a second phone line to which connected the PSTN to the second phone line socket. Then, a step is performed to detect the electrical signals at the first phone line socket, for obtaining a first determined result and setting a first sense logic value based thereon. A step is subsequently performed to detect the electrical signals at the second phone line socket, for obtaining a second determined result and setting a second sense logic value based thereon. Finally, the connection to the first phone line socket and the second phone line socket is routed based on the first sense logic value and the second sense logic value.

According to another aspect, the present invention which achieves these objects relates to an auto-swap call box device for VoIP telephony, which is electrically connected to a traditional phone and a PSTN. The VoIP call box includes a first phone line socket, a second phone line socket, a switch module, a line interface module, a subscriber line interface circuit module, and a control module. The switch module is electrically connected to the first phone line socket and the second phone line socket respectively. The line interface module is electrically connected to the switch module. The subscriber line interface circuit module is electrically connected to the switch module. The control module is electrically connected respectively to the switch module, the line interface module, and the subscriber line interface circuit module. When the first phone line socket and the second phone line socket are electrically connected (randomly) to a first phone line to which connected the traditional phone and to a second phone line to which connected the PSTN, the control module controls the subscriber line interface circuit module, the line interface module, and the switch module to sequentially detect the electrical signals at the first and second phone line socket, so as to set a first sense logic value and a second sense logic value. The control module then accurately routes the line connection to the first and the second phone line socket based on the first and second sense logic value. The call box is thus able to operate normally through this method of automatically swapping line connection.

Other objects, advantages, and novel features of the invention will become more apparent from the following detailed description when taken in conjunction with the accompanying drawings.

### BRIEF DESCRIPTION OF THE DRAWINGS

FIG. 1 is a functional block diagram illustrating a traditional phone utilizing a call box;
FIG. 2 is a functional block diagram illustrating a traditional phone utilizing a call box to perform the functions of a VoIP phone;
FIG. 3 is a flow diagram illustrating automatic phone line swapping according to a preferred embodiment of the invention;
FIG. 4 is a flow diagram illustrating automatic phone line swapping according to another preferred embodiment of the invention; and
FIG.5 is a functional block diagram of a call box according to another preferred embodiment of the invention.
FIG. 6 is a flow diagram illustrating automatic phone line swapping according to yet another preferred embodiment of the invention.
FIG. 7 is a functional block diagram of a call box according to still another preferred embodiment of the invention.

### DETAILED DESCRIPTION OF THE PREFERRED EMBODIMENT

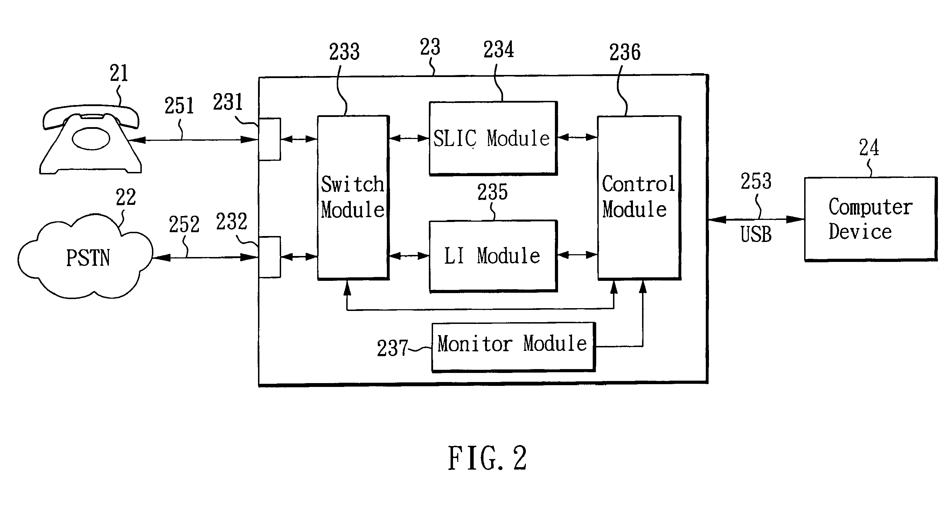

FIG 2 shows a functional block diagram illustrating the use of a call box device with a traditional phone in achieving the functions of a VoIP phone. FIG. 2 includes a traditional phone 21, a PSTN 22, a call box device 23, and a computer device 24. Call box 23 further includes a first phone line socket 231, a second phone line socket 232, a switch module 233, a SLIC (Subscriber Line Interface Circuit) module 234, an LI (Line Interface) module 235, a control module 236, and a monitor module 237. The call box 23 can be implemented independently as a call box, or implemented within a telecommunications device (e.g. telephone, modem etc.), computer device, or any other electronic apparatus.

Under normal operation, traditional phone 21 is electrically connected to the call box 23 via plugging phone line 251 with an RJ-11 jack into the first phone line socket 231. Similarly, under normal operations, PSTN 22 is electrically connected to call box 23 by plugging phone line 252 with an RJ-11 jack into the second phone line socket 232. In this embodiment, call box 23 is further electrically connected to computer device 24 via a USB connection 253. Still, in other embodiments, call box 23 can be electrically connected to computer device 24 via other interfaces such as IEEE 1394. Of course, computer device 24 in this embodiment is further connected to the Internet allowing the placement of VoIP calls by traditional phone 21 through call box 23 and computer device 24.

The first phone line socket 231 and second phone line socket 232 are electrically connected to switch module 233. Switch module 233 is further electrically connected to SLIC module 234 and LI module 235, respectively. Control module 236 is electrically connected to SLIC module 234, LI module 235, switch module 233, and monitor module 237 respectively, such that control module 236 controls the switch module 233 to route the line connection to first phone line socket 231 and second phone line socket 232. Thus, under normal circumstances, phone line 251 to which connected traditional phone 21 can be electrically connected with phone line 252, to which connected PSTN 22.

The SLIC module 234 emulates a central office to thereby provide the functions of feeding power, sensing voltage, transmitting and receiving voice data, ringing, caller ID and call progress tone (CPT). The LI module 235 consists of plural components, which enables the call box device 23 to obtain the functionality of the prior SLIC and DAA modules by cooperating with the SLIC module 234.

Below shows detailed illustration of how auto line connection routing is achieved according to a preferred embodiment of the invention.

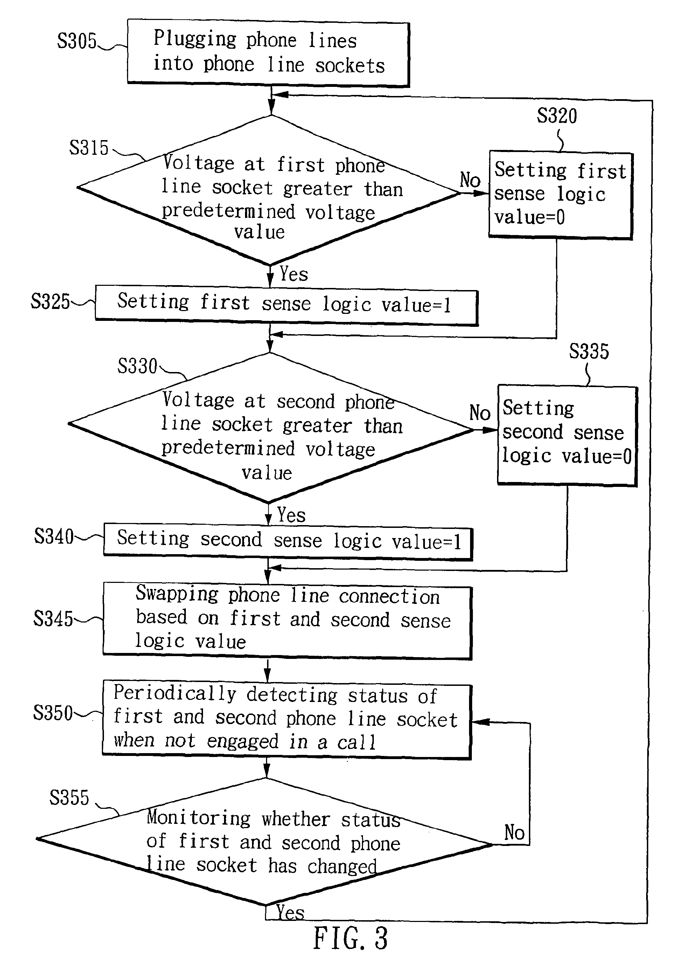

FIG. 3 shows a flow diagram illustrating a method of auto line connection routing according to the present invention. Reference should also be made to FIG. 2. First, when a user desires to make use of traditional phone 21 to place VoIP calls, call box 23 as provided by the present invention must be configured in between traditional phone 21 and computer device 24. Thus, the user must first plug the RJ-11 jack of phone line 251 of traditional phone 21 into first phone line socket 231, and plug the RJ-11 jack of phone line 252 of PSTN 22 into second phone line socket 232 of call box 23 (step 305). However, the RJ-11 jacks of phone lines 251 and 252 can be mistakenly plugged into the wrong sockets. Thus, to address such problems, control module 236 first controls switch module 233 such that first phone line socket 231 and SLIC module 234 are electrically connected to each other, and such that the second phone line socket 232 and LI module 235 are electrically connected to each other. Then, SLIC module 234 detects electrical signals at the first phone line socket 231, and compares the detected result with a predetermined electrical signal value (step S315), for obtaining a first determined result and setting a first sense logic value based thereon.

In the embodiment of the invention, SLIC module 234 is to detect the voltage at first phone line socket 231 via the line voltage-sensing unit (not shown) within SLIC module 234, and determine whether the detected voltage is greater than a predetermined voltage value. The predetermined voltage value is preferably 18 volts, or may be of a different value depending on the internal circuit design of call box 23.

If the voltage at first phone line socket 231 is less than the predetermined voltage value, then the first sense logic value (RJ11A_LVS_VALID) is set to "0" (step S320). Given the nature that traditional phone 21 does not provide voltage and the SLIC module on one end of PSTN 22 provides 48V of voltage, the first sense logic value is set to "0" - when the detected voltage at first phone line socket 231 is less than the predetermined voltage value (e.g. 18V) - so as to equivalently represent that the connection is currently established between first phone line socket 231 and phone line 251 of traditional phone 21.

If the voltage at phone line socket 231 is greater than the predetermined voltage value, then the first sense logic value (RJ11A_LVS_VALID) is set to "1" (step S325), for representing that the connection is currently established between first phone line socket 231 and phone line 252 to which connected PSTN 22.

In addition to determining the voltage at first phone line socket 231, SLIC module 234 further determines the polarity of the voltage at first phone line socket 231, and sets a voltage polarity value based on the determined voltage polarity.

Then, control module 236 controls switch module 233 such that first phone line socket 231 and LI module 235 are electrically connected to each other, and second phone line socket 232 and SLIC module 234 are electrically connected to each other. Thus, SLC module 234 can then detect the electrical signals at the second phone line socket 232, and compare the detected electrical signal with the predetermined electrical signal value (step S330), for obtaining a second determined result, and set a second sense logic value based on the second determined result. In the embodiment of the invention, SLIC module 234 is to detect the voltage at second phone line socket 232, and determine whether the detected voltage is greater than the predetermined voltage value (e.g. 18V) (step S330).

If the voltage at second phone line socket 232 is less than the predetermined voltage value, then the second sense logic value (RJ11B_LVS_VALID) is set to "0" (step S335), for representing the connection established between second phone line socket 232 and phone line 251 to which connected traditional phone 21.

If the voltage at second phone line socket 232 is greater than the predetermined voltage value, then the second sense logic value (RJ11B_LVS_VALID) is set to "1" (step S340), for representing the connection established between second phone line socket 232 and phone line 252 to which connected PSTN 22.

At this time, SLIC module 234 also determines the polarity of the voltage at second phone line socket 232, and sets a voltage polarity value based on the determined voltage polarity.

After the SLIC module 234 determines the voltage at first phone line socket 231 and second phone line socket 232, control module 236 then can controls switch module 233 based on the first sense logic value and the second sense logic value, such that first phone line socket 231 and second phone line socket 232 can be routed to the correct line connections. That is, regardless of whether being plugged into first phone line socket 231 or second phone line socket 232, the phone line 251 connected with traditional phone 21 can be made to electrically connect with SLIC module 234 via the routing of switch module 233. Similarly, regardless of whether being plugged into first phone line socket 231 or second phone line socket 232, phone line 252 connected with PSTN 22 can also be made to electrically connect with LI module 235 via the routing of switch module 233 (step S345). After completing the initial electrical connection between the modules within call box 23 and the phone line sockets 231 and 232, the user can then readily place VoIP calls via traditional phone 21. Also, after the correct line connection has been established, under the normal circumstance (under power standby mode), regardless of whether being connected to first phone line socket 231 or second phone line socket 232, phone line 251 can be electrically connected to phone line 252 to which connected PSTN 22, such that the user can readily use traditional phone 22 to place regular calls to the PSTN 22. During this operation, the phone line 252 of PSTN 22 is also electrically connected to LI module 235. Of course, control module 236 can also configure the phone line 251 such that regardless of whether being connected to first phone line socket 231 or second phone line socket 232, phone line 251 can be electrically connected to SLIC module, such that the user can readily place VoIP calls using the traditional phone 21. During this operation, the phone line 252 of PSTN 22 is also electrically connected to LI module 235.

Further in details, when the first sense logic value is set to"1" and the second sense logic value to "0", first phone line socket 231 is electrically connected to phone line 252 to which connected PSTN 22, and second phone line socket 232 is electrically connected to phone line 251 to which connected traditional phone 21. Based on the first sense logic value and the second sense logic value, control module 236 is able to obtain knowledge of the line connection of the first phone line socket 231 and second phone line socket 232. Control module 236 then controls switch module 233 to route the line connections, such that first phone line socket 231 is electrically connected with LI module 235, and second phone line socket 232 is electrically connected with first phone line socket 231. Thus, under normal circumstances, a regular call can then readily be made by traditional phone 21 to PSTN 22. Similarly, control module 236 can also control switch module 233 to route line connections, such that first phone line socket 231 is electrically connected with LI module 235 and second phone line socket 232 is electrically connected with SLIC module. Thus, under normal circumstances, a VoIP call can then readily be made by traditional phone 21 under the correct line connections.

Similarly, when the first sense logic value is set to"0" and the second sense logic value to "1", first phone line socket 231 is electrically connected to phone line 251 to which connected traditional phone 21, and second phone line socket 232 is electrically connected to phone line 252 to which connected PSTN 22. Based on the first sense logic value and the second sense logic value, control module 236 is able to obtain knowledge of the line connection of the first phone line socket 231 and second phone line socket 232. Control module 236 then controls switch module 233 to route the line connections, such that first phone line socket 231 is electrically connected with second phone line socket 232 and second phone line socket 232 is electrically connected with LI module 235, or such that the first phone line socket 231 is electrically connected with SLIC module 234 and second phone line socket 232 is electrically connected with LI module 235, thus completing the correct auto line connection routing.

Of course, if the first and second sense logic values do not satisfy the above-mentioned conditions, then only partial functions of call box 23 are provided based on the two sense logic values, or the functions of call box 23 are terminated and the call box 23 is rebooted.

In more details, when the first sense logic value is set to"0" and the second sense logic value as "0", either one of first phone line socket 231 and second phone line socket 232 is connected with phone line 251 of traditional phone 21, and the other remaining phone line socket is left unplugged. After the control module 236 obtains knowledge of the respective line connections of first phone line socket 231 and second phone line socket 232, SLIC module 234 can make traditional phone 21 ring so as to determine the phone line socket electrically connected thereto. Control module 236 then controls switch module 233 to execute phone line connection routing such that SLIC module 234 is electrically connected to the phone line socket connected with traditional phone 21, and such that call box 23 and its VoIP application software can only place or receive VoIP calls, and no PSTN calls. Preferably, VoIP application software is installed in computer device 24. For instance, when first phone line socket 231 is connected to phone line 251 of traditional phone 21 and second phone line socket 232 is left unplugged, then traditional phone 21 is configured so as to only place and receive VoIP calls via call box 23 and computer device 24.

Similarly, when the first sense logic value is set to"1" and the second sense logic value is set to"1", first phone line socket 231 and second phone line socket 232 are both connected to phone line 252 of PSTN 22. After control module 236 obtains knowledge of the respective connections of first phone line socket 231 and second phone line socket 232, the VoIP application software responsively terminates all functions of call box 23 and causes it to reboot while also informing the user of operational error. For instance, VoIP application software informs the user that the phone line sockets must be respectively connected to traditional phone 21 and PSTN 22 in order to ensure complete and accurate operation of call box 23.

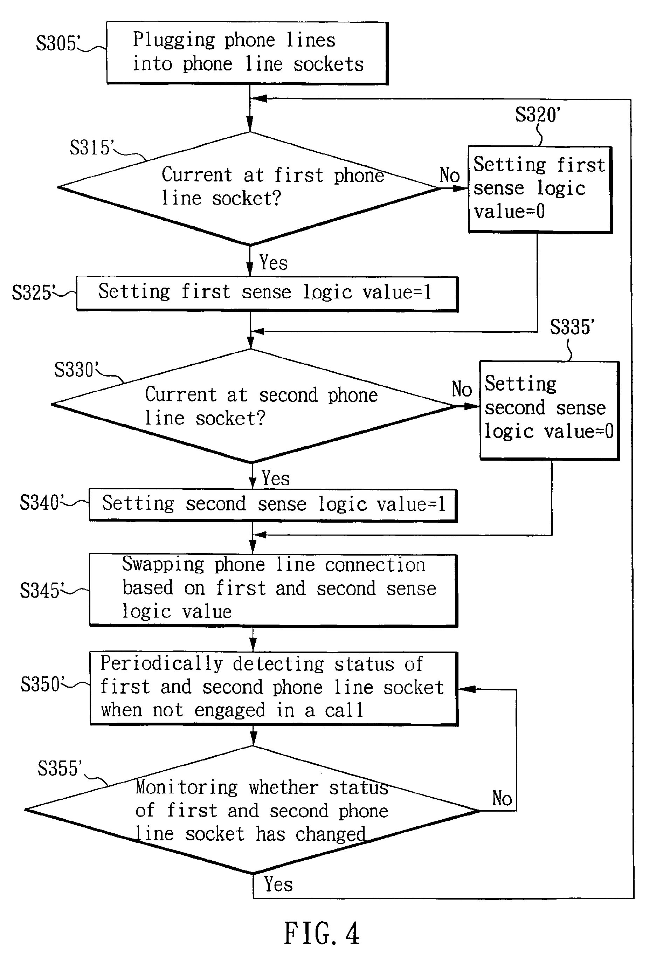

FIG. 4 shows a flow diagram illustrating a method of auto line connection routing according to another embodiment of the invention. FIG. 4 differs from FIG. 3 in that after phone lines 251 and 252 are plugged into phone line sockets 231 and 232 (step S305'), control module 236 first controls switch module 233 such that first phone line socket 231 is electrically connected with LI module 235. LI module 235 then detects whether current flows through first phone line socket 231 (step S315'). That is, the circuit within LI module 235 emulates an off-hook, the equivalent of placing a loading on PSTN. At this time, if first phone line socket 231 is connected to PSTN 22, then PSTN 22 forms a loop with the circuit within LI module 235 and a loop current flows through phone line socket 231; thus, when LI module 235 detects the loop current, first sense logic value is thus set to "1" (step S325'). If first phone line socket 231 is however connected to traditional phone 21, then a loop can not be formed between traditional phone 21 and the circuit within LI module 235. The sense logic value in this case will be set to "0" since no current flows through and is detected at first phone line socket 231 (step S320'). Then, control module 236 controls switch module 233 such that second phone line socket 232 is electrically connected with LI module 235. The LI module 235 then detects whether current flows through second phone line socket 232 (step S330'). If said loop current is indeed detected, then the second sense logic value is set to "1" (step S340'). If however no loop current is detected, then the second sense logic value is set to "0" (step S335').

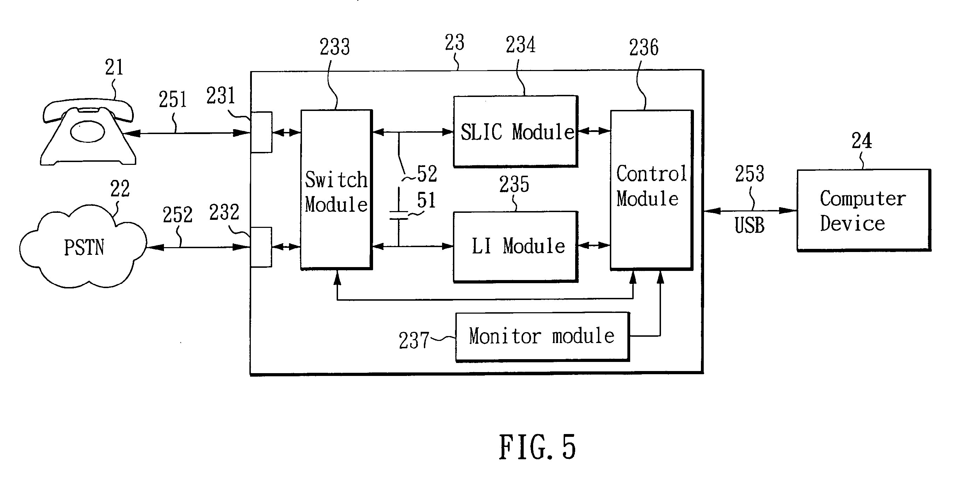

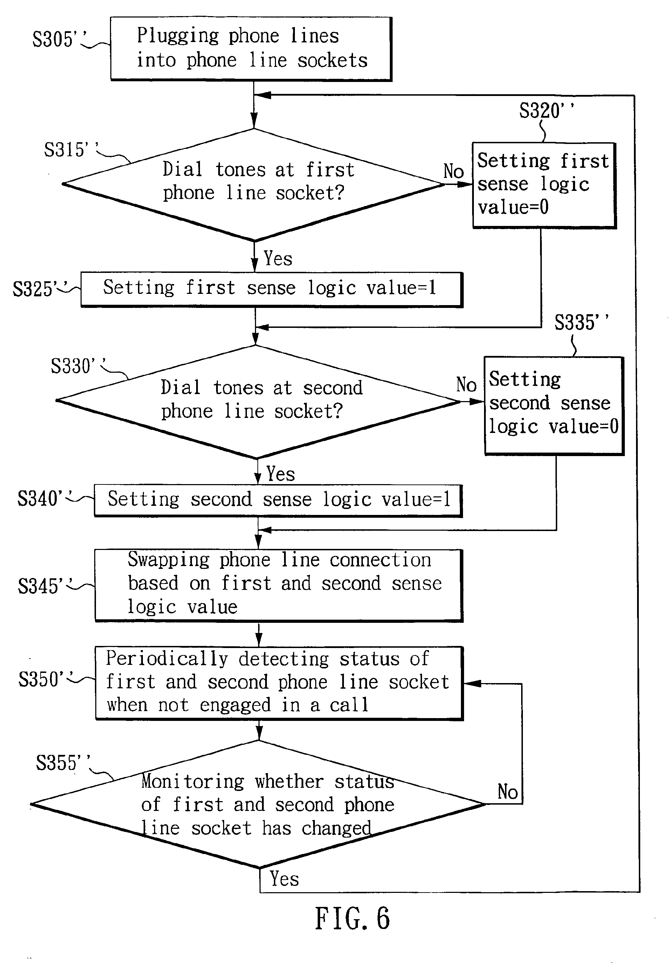

FIG. 5 and FIG. 6 respectively show a functional block diagram illustrating the use of a call box to transform a traditional phone into a VoIP phone and a flow diagram illustrating auto line connection routing according to yet another embodiment of the invention. FIG. 5 differs from FIG. 2 in that a capacitor 51 and a switch 52 are added in between LI module 235 and SLIC module 234. FIG. 6 differs from FIG. 3 in that after phone lines 251 and 252 are plugged into phone line sockets 231 and 231 (step S305"), control module 236 controls the switch module 233 to route the line connections, such that first phone line socket 231 is electrically connected with LI module 235, and the electrical signal at first phone line socket 231 is transmitted via capacitor 51, SLIC module 234, and control module 236 to computer device 24. The software installed on the computer device 24 then detects the frequency composition of the transmitted electrical signal (step S315"). That is, control module 236 operates to turn on the switch 52 (SW on) allowing conduction through capacitor 51, and triggers the circuit within LI module 235 to emulate an off-hook (the equivalent of placing a loading on PSTN). At this time, if first phone line socket 231 is connected to PSTN 22, then PSTN 22 forms a loop with the circuit within LI module 235, and a dial tone or any other frequency composition is transmitted. The dial tone is transmitted to the computer device 24 via capacitor 51, SLIC module 234 and control module 236, in which the software installed on computer device 24 then detects the frequency composition of the dial tone. If the dial tone is detected, then the first sense logic value is set to "1" (step S325"). Alternatively, the frequency composition of the dial tone can also be detected by the hardware elements implemented in call box 23. If however, the first phone line socket 231 is connected to traditional phone 21, then a loop can not be formed between traditional phone 21 and the circuit within LI module 235, and hence a dial tone is not transmitted. The first sense logic value in this case is set to "0" since neither SLIC module 234 nor the software on the computer device 24 detects any frequency composition (step S320"). Next, control module 236 controls switch module 233 to route the line connections, such that second phone line socket 232 is connected with LI module 235, and the software installed on computer device 24 is used to detect the frequency composition of the electrical signals at second phone line socket 232 (step S330"). If a dial tone is detected, then the second sense logic value is set to "1" (step S340"), if no frequency is detected, then the second sense logic value is set to "0" (step S335").

In addition, monitor module 237 of call box 23 is electrically connected with control module 236 such that monitor module 237 periodically informs the control module 236 to control the switch module 233 to route the line connections when call box 23 is not engaged in a call. Then, one of SLIC module 234, LI module 235, and software installed on computer device 24 is used to determine whether the respective status of the electrical signals at the phone line sockets 231 and 232 has changed. The first and second sense logic value are then again set, and based on the first and second sense logic values control module 236 controls switch module 233 to route the line connections to first and second phone line sockets 231 and 232. Whence, the call box 23 can operate normally in the way it is designed. In more details, after completing the initial electrical connection of the phone line sockets 231 and 232 with the modules within call box 23, the monitor module 237 periodically, such a in an interval of two seconds, and when call box 23 is not engaged in a call, triggers the control module 236 to detect whether the respective status at phone line sockets 231 and 232 has changed (step S350, S355), such as being changed from connected to disconnected, or from disconnected to connected etc. When the status has indeed changed, control module 236 is triggered to control the switch module 233 to execute the correct line connection routing, such as in accordance with the process shown in FIG. 3, 4 or 6, in which call box 23 either operates in the way it is designed or is terminated all functions and rebooted. The monitor module 237 can be one of the hardware elements configured in call box 23, or implemented as the software module within computer device 24.

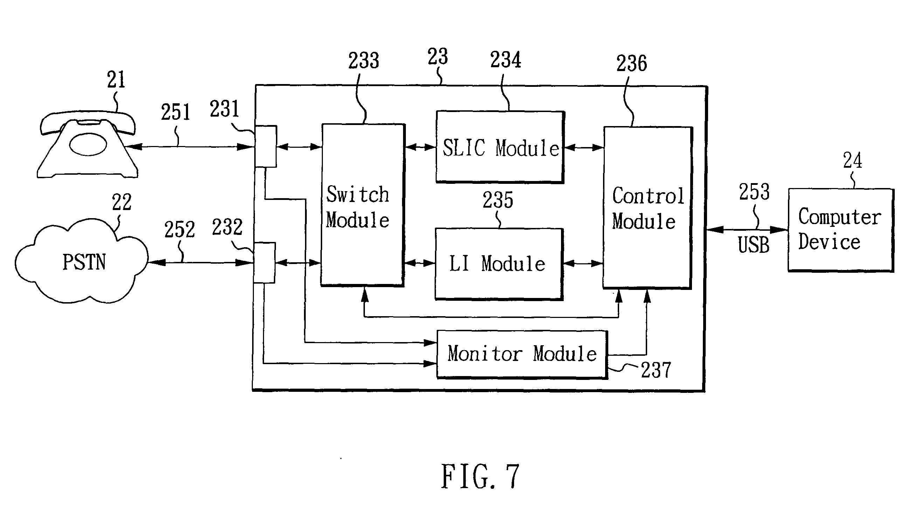

FIG. 7 shows a functional block diagram according to still another embodiment of the invention. The monitoring is realized using hardware implementation. Monitor module 237 is coupled to phone line sockets 231 and 232 so as to detect the electrical signals therefrom directly. Based on the phone line connections, call box 23 in this embodiment can also be configured to operate in the way it is designed or be terminated of all functions and rebooted.

As know from above, the invention utilizes SLIC module and LI module to sequentially detect the electrical signals (voltage, current, or frequency composition) at the first phone line socket and the electrical signals (voltage, current, or frequency composition) at the second phone line socket, so as to determine whether the voltage at the first phone line socket and the voltage at the second phone line socket are greater than the predetermined voltage value, or whether a current or dial tone is present. Thereafter, a first sense logic value and a second sense logic value are set. The line connection of the first and second phone line socket can thus be determined based on the first and second sense logic values, thus successfully providing: auto line connection routing, partial functions of the call box, or terminating of all functions and rebooting of the call box.

To base on foregoing description, a still another embodiment of the invention discloses a method of automatically swapping line connection, applied to a device electrically connected with a traditional phone and a PSTN (Public Switched Telephone Network) respectively, wherein the device comprising a first phone line socket and a second phone line socket, the traditional phone is electrically connected with one of the first phone line socket and the second phone line socket, and the PSTN is electrically connected with the other one of the first phone line socket and the second phone line socket. The method comprises the steps of:
detecting electrical signals at a first test phone line socket, wherein electrical signals at the first test phone line socket could be detected by electrically connecting the first test phone line socket and the first measure module;
determining whether electrical signals at the first test phone line socket are inside of a predetermined range for electrical signals, so as to set a sense logic value, wherein the first test phone line socket is one of the first phone line socket and the second phone line socket; and
electrically connecting the first measure module and the first test phone line socket, and electrically connecting a second measure module and a second test phone line socket, wherein the first measure module is one of a first electrical signal module and a second electrical signal module, the second measure module is the other one of the first electrical signal module and the second electrical signal module, and the second test phone line socket is the other one of the first phone line socket and the second phone line socket.

If the sense logic value means that electrical signals at the first test phone line socket are inside of the predetermined range for electrical signals, the first test phone line socket is electrically connected with the second measure module, and the second test phone line socket is electrically connected with the first measure module.

Oppositely, if the sense logic value means that electrical signals at the first test phone line socket are outside of the predetermined range for electrical signals, the first test phone line socket is electrically connected with the first measure module, and the second test phone line socket is electrically connected with the second measure module.

Then, the method further comprises the steps of:
detecting electrical signals at the second test phone line socket, wherein electrical signals at the second test phone line socket could be detected by switching the first measure module electrically connected with the first test phone line socket to be electrically connected with the second test phone line socket; and
determining whether electrical signals at the second test phone line socket are inside of the predetermined range for electrical signals, so as to set the sense logic value:

Of course, it is easy for periodically detecting whether electrical signals at the first test phone line socket have changed, and if yes, re-routing the first test phone line socket to the correct measure module.

Wherein the first measure module could be a SLIC module and the second measure module could be a LI module. Furthermore, the first test phone line socket electrically connected with the SLIC module could be optionally switching to be electrically connected with the second test phone line socket.

Because the electrical signals certainly comprise a frequency composition, electrical signals at the first test phone line socket could be determined whether the frequency of the electrical signals at the first test phone line socket is inside of the predetermined range for electrical signals by a computer, wherein electrical signals at the first test phone line socket are transmitted to the computer via the LI module, a capacitor module, and the SLIC module in turn.

In the same way, electrical signals at the second test phone line socket could be determined whether the frequency of the electrical signals at the second test phone line socket is inside of the predetermined range for electrical signals by the computer, wherein electrical signals at the second test phone line socket are transmitted to the computer via the LI module, a capacitor module, and the SLIC module in turn, and the capacitor module could electrically connect the SLIC module and the LI module.

In terms of the above-mentioned method, a still another embodiment of the invention discloses an auto-swap call box device for VoIP telephony, electrically connected with a traditional phone and a PSTN respectively. The call box device comprises a first test phone line socket, a second test phone line socket, a first measure module, a second measure module, and a switch module, wherein the first test phone line socket is one of a first phone line socket and a second phone line socket, the second test phone line socket is the other one of the first phone line socket and the second phone line socket, the first measure module is one of a first electrical signal module and a second electrical signal module, and the second measure module is the other one of the first electrical signal module and the second electrical signal module. The first measure module is electrically connected with the first test phone line socket, so as to detect electrical signals at the first test phone line socket and determine whether electrical signals at the first test phone line socket are inside of a predetermined range for electrical signals for setting a sense logic value. Then, the switch module makes electrically connecting the first measure module and the first test phone line socket, and electrically connecting the second measure module and the second test phone line socket according to the sense logic value.

If the sense logic value means that electrical signals at the first test phone line socket are inside of the predetermined range for electrical signals, the first test phone line socket is electrically connected with the second measure module, and the second test phone line socket is electrically connected with the first measure module.

Oppositely, if the sense logic value means that electrical signals at the first test phone line socket are outside of the predetermined range for electrical signals, the first test phone line socket is electrically connected with the first measure module, and the second test phone line socket is electrically connected with the second measure module.

Then, the switch module switches the first measure module electrically connected with the first test phone line socket to be electrically connected with the second test phone line socket, so as to detect electrical signals at the second test phone line socket by the first measure module, determine whether electrical signals at the second test phone line socket are inside of the predetermined range for electrical signals for setting the sense logic value.

The call box device could further comprise a monitor module electrically connected with the first test phone line socket and the second test phone line socket for periodically detecting whether electrical signals at the first test phone line socket and electrical signals at the second test phone line socket have changed, and if yes, re-routing the first test phone line socket and the second test phone line socket to the correct measure module.

Wherein the first measure module could be a SLIC module and the second measure module could be a LI module. Furthermore, the first test phone line socket electrically connected with the SLIC module could be optionally switching to be electrically connected with the second test phone line socket.

The call box device further comprises a capacitor module and a computer because the electrical signals certainly comprise a frequency composition. Electrical signals at the first test phone line socket could be determined whether the frequency of the electrical signals at the first test phone line socket is inside of the predetermined range for electrical signals by the computer, wherein electrical signals at the first test phone line socket are transmitted to the computer via the LI module, a capacitor module, and the SLIC module in turn.

In the same way, electrical signals at the second test phone line socket could be determined whether the frequency of the electrical signals at the second test phone line socket is inside of the predetermined range for electrical signals by the computer, wherein electrical signals at the second test phone line socket are transmitted to the computer via the LI module, a capacitor module, and the SLIC module in turn, and the capacitor module could electrically connect the SLIC module and the LI module.

In more details according the foregoing method and device, it could be supposed that the first test phone line socket is the first phone line socket, the second test phone line socket is the the second phone line socket, the first measure module is the first electrical signal module which could be the SLIC module, the second measure module is the second electrical signal module which could be the LI module, and the predetermined range is "greater than 18V", wherein the first phone line socket is electrically connected with the SLIC module, and the second phone line socket is electrically connected with the LI module.

At first, the first phone line socket is electrically connected with the SLIC module to detect the voltage at the first phone line socket, and determining whether the voltage at the first phone line socket is inside of the predetermined range. If the voltage at the first phone line socket is inside of the predetermined range, i.e. the voltage at the first phone line socket is greater than 18V, the sense logic value is set to (1,0). Otherwise, the sense logic value is set to (0,1) if the voltage at the first phone line socket is outside of the predetermined range, i.e. the voltage at the first phone line socket is less than 18V

When the sense logic value is set to (1,0), the switch module switches the first phone line socket electrically connected with the SLIC module to be electrically connected with the LI module. Of course, the switch module could also switch the second phone line socket electrically connected with the LI module to be electrically connected with the SLIC module according to the sense logic value (1,0). In addition, when the sense logic value is set to (0,1), the first phone line socket keeps electrically connected with the SLIC module, and the second phone line socket could also keep electrically connected with the LI module according to the sense logic value (0,1).

After detecting the voltage at the first phone line socket, the second phone line socket electrically connected with the LI module could be switched to be electrically connected with the SLIC module for detecting the voltage at the second phone line socket and determining whether the voltage at the second phone line socket is inside of the predetermined range.

If the voltage at the first phone line socket is inside of the predetermined range, and the voltage at the second phone line socket is outside of the predetermined range, i.e. the voltage at the second phone line socket is less than 18V, the sense logic value is still set to (1,0). Otherwise, the sense logic value is still set to (0,1) if the voltage at the first phone line socket is outside of the predetermined range, and the voltage at the second phone line socket is inside of the predetermined range, i.e. the voltage at the second phone line socket is greater than 18V.

As know from above, When the sense logic value is set to (1,0), the switch module switches the first phone line socket electrically connected with the SLIC module to be electrically connected with the LI module, the switch module also switches the second phone line socket electrically connected with the LI module to be electrically connected with the SLIC module. In addition, when the sense logic value is set to (0,1), the first phone line socket keeps electrically connected with the SLIC module, and the second phone line socket also keeps electrically connected with the LI module.

Of course, the first phone line socket could be switched to be electrically connected with the second phone line socket for making electrically connecting the phone line of a traditional phone and the phone line of PSTN.

Beside, if both the voltage at the first phone line socket and the second phone line socket are outside of the predetermined range, the sense logic value is set to (0,0), and if both the voltage at the first phone line socket and the second phone line socket are inside of the predetermined range, the sense logic value is set to (1,1).

When the sense logic value is set to (0,0), either one of the first phone line socket and the second phone line socket is connected with phone line of traditional phone, and the other remaining phone line socket is left unplugged. After obtaining knowledge of the respective line connections of the first phone line socket and the second phone line socket, SLIC module can make traditional phone ring so as to determine the phone line socket electrically connected thereto. The switch module then executes phone line connection routing such that the SLIC module is electrically connected with the phone line socket connected with traditional phone.

Similarly, when the sense logic value is set to (1,1), the first phone line socket and the second phone line socket are both connected with phone line of PSTN. After obtaining knowledge of the respective connections of the first phone line socket and the second phone line socket, the VoIP application software responsively terminates all functions of call box and causes it to reboot while also informing the user of operational error.

If the predetermined range changes from "greater than 18V" to "0A", the sense logic value is still obtained as the foregoing conditions. At first, the second phone line socket is electrically connected with the LI module to detect the electric current at the second phone line socket, and determining whether the electric current at the second phone line socket is inside of the predetermined range. If the electric current at the second phone line socket is inside of the predetermined range, i.e. the electric current at the second phone line socket is OA, the sense logic value is set to (1,0). Otherwise, the sense logic value is set to (0,1) if the electric current at the second phone line socket is outside of the predetermined range, i.e. there is a loop with the circuit within the LI module and a loop current flows through the second phone line socket.

When the sense logic value is set to (1,0), the switch module switches the second phone line socket electrically connected with the LI module to be electrically connected with the SLIC module. Of course, the switch module could also switch the first phone line socket electrically connected with the SLIC module to be electrically connected with the LI module according to the sense logic value (1,0). In addition, when the sense logic value is set to (0,1), the second phone line socket keeps electrically connected with the LI module, and the first phone line socket could also keep electrically connected with the SLIC module according to the sense logic value (0,1).

After detecting the electric current at the second phone line socket, the first phone line socket electrically connected with the SLIC module could be switched to be electrically connected with the LI module for detecting the electric current at the first phone line socket and determining whether the electric current at the first phone line socket is inside of the predetermined range.

If the electric current at the second phone line socket is inside of the predetermined range, and the electric current at the first phone line socket is outside of the predetermined range, the sense logic value is still set to (1,0). Otherwise, the sense logic value is still set to (0,1) if the electric current at the second phone line socket is outside of the predetermined range, and the electric current at the first phone line socket is inside of the predetermined range.

As know from above, when the sense logic value is set to (1,0), the switch module switches the first phone line socket electrically connected with the SLIC module to be electrically connected with the LI module, the switch module also switches the second phone line socket electrically connected with the LI module to be electrically connected with the SLIC module. In addition, when the sense logic value is set to (0,1), the first phone line socket keeps electrically connected with the SLIC module, and the second phone line socket also keeps electrically connected with the LI module.

Of course, the first phone line socket could be switched to be electrically connected with the second phone line socket for making electrically connecting the phone line of the traditional phone and the phone line of PSTN.

Beside, if both the electric current at the first phone line socket and the second phone line socket are inside of the predetermined range, the sense logic value is set to (0,0), and if both the electric current at the first phone line socket and the second phone line socket are outside of the predetermined range, the sense logic value is set to (1,1). Based on the phone line connections, the call box in this embodiment can also be configured to operate in the way it is designed or be terminated of all functions and rebooted.

When PSTN forms a loop with the circuit within the LI module, a dial tone or any other frequency composition is transmitted to a computer via the LI module, a capacitor module, and the SLIC module in turn. So, it can be determined whether PSTN is electrically connected with the LI module by determining whether the frequency is inside of the predetermined range. For example, it is means that PSTN is not electrically connected with the LI module because the computer determines "no frequency". The capacitor module could comprise a capacitor and a switch, wherein the switch could be turned on for detecting the frequency composition and be turned off for detecting the voltage and the current.

As know from above, the invention utilizes the SLIC module and the LI module to sequentially detect the electrical signals (voltage, current, or frequency composition) at the first phone line socket and the electrical signals (voltage, current, or frequency composition) at the second phone line socket, so as to determine whether the voltage at the first phone line socket and the voltage at the second phone line socket are greater than the predetermined voltage value, or whether a current or dial tone is present. Thereafter, a sense logic value is set. The line connection of the first and second phone line socket can thus be determined based on the first and second sense logic values, thus successfully providing: auto line connection routing, partial functions of the call box, or terminating of all functions and rebooting of the call box.

Although the present invention has been explained in relation to its preferred embodiment, it is to be understood that many other possible modifications and variations can be made without departing from the spirit and scope of the invention as hereinafter claimed.

## Claims

1. A method of automatically swapping line connection, applied to a device electrically connected with a traditional phone and a PSTN (Public Switched Telephone Network) respectively, wherein the device comprising a first phone line socket and a second phone line socket, said traditional phone is electrically connected with one of said first phone line socket and said second phone line socket, and said PSTN is electrically connected with the other one of said first phone line socket and said second phone line socket, the method comprising the steps of:
detecting electrical signals at a first test phone line socket;
determining whether electrical signals at said first test phone line socket are inside of a predetermined range for electrical signals, so as to set a sense logic value, wherein said first test phone line socket is one of said first phone line socket and said second phone line socket; and
electrically connecting a first measure module and said first test phone line socket, and electrically connecting a second measure module and a second test phone line socket, wherein said first measure module is one of a first electrical signal module and a second electrical signal module, said second measure module is the other one of said first electrical signal module and said second electrical signal module, and said second test phone line socket is the other one of said first phone line socket and said second phone line socket..

2. A method of automatically swapping line connection according to claim 1, wherein said sense logic value means that electrical signals at said first test phone line socket are inside of said predetermined range for electrical signals, so as to electrically connect said first test phone line socket and said second measure module, and electrically connect said second test phone line socket and said first measure module.

3. A method of automatically swapping line connection according to claim 1, wherein said sense logic value means that electrical signals at said first test phone line socket are outside of said predetermined range for electrical signals, so as to electrically connect said first test phone line socket and said first measure module, and electrically connect said second test phone line socket and said second measure module.

4. A method of automatically swapping line connection according to claim 1, further comprising the steps of:
electrically connecting said first test phone line socket and said first measure module, so as to detect electrical signals at said first test phone line socket and determine whether electrical signals at said first test phone line socket are inside of said predetermined range for electrical signals.

5. A method of automatically swapping line connection according to claim 1, further comprising the steps of:
detecting electrical signals at said second test phone line socket; and
determining whether electrical signals at said second test phone line socket are inside of said predetermined range for electrical signals, so as to set said sense logic value.

6. A method of automatically swapping line connection according to claim 5, further comprising the steps of:
electrically connecting said first test phone line socket and said first measure module, so as to detect electrical signals at said first test phone line socket; and
switching said first measure module electrically connected with said first test phone line socket to be electrically connected with said second test phone line socket, so as to detect electrical signals at said second test phone line socket.

7. A method of automatically swapping line connection according to claim 1, wherein said first measure module is a SLIC (Subscriber Line Interface Circuit) module.

8. A method of automatically swapping line connection according to claim 7, wherein said second measure module is a LI (Line Interface) module.

9. A method of automatically swapping line connection according to claim 7, further comprising the steps of:
Switching said first test phone line socket electrically connected with said SLIC module to be electrically connected with said second test phone line socket.

10. A method of automatically swapping line connection according to claim 8, wherein said electrical signals comprises a frequency composition, wherein a method of detecting said frequency composition comprises the steps of:
transmitting electrical signals at said first test phone line socket to a computer via said LI module, a capacitor module, and said SLIC module in turn;
determining whether said frequency of said electrical signals at said first test phone line socket is inside of said predetermined range for electrical signals.

11. A method of automatically swapping line connection according to claim 10, wherein said method of detecting said frequency composition further comprises the steps of:
transmitting electrical signals at said second test phone line socket to said computer via said LI module, said capacitor module, and said SLIC module in turn;
determining whether said frequency of said electrical signals at said second test phone line socket is inside of said predetermined range for electrical signals.

12. A method of automatically swapping line connection according to claim 11, further comprising the steps of:
periodically detecting whether electrical signals at said first test phone line socket have changed, and if yes, re-routing said first test phone line socket to the correct measure module.

13. A method of automatically swapping line connection according to claim 1, wherein said predetermined range for electrical signals is greater than 18 voltages.

14. A method of automatically swapping line connection according to claim 1, wherein said predetermined range for electrical signals is an electric current, 0 ampere.

15. An auto-swap call box device for VoIP telephony, electrically connected with a traditional phone and a PSTN respectively, the call box device comprising:
a first test phone line socket is one of a first phone line socket and a second phone line socket;
a second test phone line socket is the other one of said first phone line socket and said second phone line socket;
a first measure module is one of a first electrical signal module and a second electrical signal module;
a second measure module is the other one of said first electrical signal module and said second electrical signal module, wherein said first measure module is electrically connected with said first test phone line socket, so as to detect electrical signals at said first test phone line socket and determine whether electrical signals at said first test phone line socket are inside of a predetermined range for electrical signals for setting a sense logic value; and
a switch module makes electrically connecting said first measure module and said first test phone line socket, and electrically connecting said second measure module and said second test phone line socket according to said sense logic value.

16. An auto-swap call box device for VoIP telephony according to claim 15, wherein said sense logic value means that electrical signals at said first test phone line socket are inside of said predetermined range for electrical signals, so as to electrically connect said first test phone line socket and said second measure module, and electrically connect said second test phone line socket and said first measure module.

17. An auto-swap call box device for VoIP telephony according to claim 15, wherein said sense logic value means that electrical signals at said first test phone line socket are outside of said predetermined range for electrical signals, so as to electrically connect said first test phone line socket and said first measure module, and electrically connect said second test phone line socket and said second measure module.

18. An auto-swap call box device for VoIP telephony according to claim 15, wherein said switch module switches said first measure module electrically connected with said first test phone line socket to be electrically connected with said second test phone line socket, so as to detect electrical signals at said second test phone line socket by said first measure module, determine whether electrical signals at said second test phone line socket are inside of said predetermined range for electrical signals for setting said sense logic value.

19. An auto-swap call box device for VoIP telephony according to claim 15, wherein said first measure module is a SLIC module.

20. An auto-swap call box device for VoIP telephony according to claim 19, wherein said second measure module is a LI module.

21. An auto-swap call box device for VoIP telephony according to claim 19, wherein said switch module switches said first test phone line socket electrically connected with said SLIC module to be electrically connected with said second test phone line socket.

22. An auto-swap call box device for VoIP telephony according to claim 20, further comprising a capacitor module and a computer, wherein said electrical signals comprises a frequency, and said computer determines whether said frequency of said electrical signals at said first test phone line socket is inside of said predetermined range for electrical signals by transmitting electrical signals at said first test phone line socket to said computer via said LI module, a capacitor module, and said SLIC module in turn.

23. An auto-swap call box device for VoIP telephony according to claim 22, wherein said computer determines whether said frequency of said electrical signals at said second test phone line socket is inside of said predetermined range for electrical signals by transmitting electrical signals at said second test phone line socket to said computer via said LI module, a capacitor module, and said SLIC module in turn.

24. An auto-swap call box device for VoIP telephony according to claim 18, further comprising a monitor module, wherein said monitor module is electrically connected with said first test phone line socket and said second test phone line socket for periodically detecting whether electrical signals at said first test phone line socket and electrical signals at said second test phone line socket have changed, and if yes, re-routing said first test phone line socket and said second test phone line socket to the correct measure module.

25. An auto-swap call box device for VoIP telephony according to claim 15, wherein said predetermined range for electrical signals is greater than 18 voltages.

26. An auto-swap call box device for VoIP telephony according to claim 15, wherein said predetermined range for electrical signals is an electric current, 0 ampere.
